Europäisches Patentamt

(19) European Patent Office    (11) Publication number:    **0 067 210**

Office européen des brevets    **B1**

(12) **EUROPEAN PATENT SPECIFICATION**

(45) Date of publication of patent specification: **31.07.85**    (51) Int. Cl.⁴: **F 16 C 19/00**

(21) Application number: **82900442.3**

(22) Date of filing: **15.12.81**

(86) International application number:
**PCT/US81/01678**

(87) International publication number:
**WO 82/02231 08.07.82 Gazette 82/17**

(54) **ANTI-FRICTION BEARING.**

(30) Priority: **29.12.80 US 220863**

(43) Date of publication of application:
**22.12.82 Bulletin 82/51**

(45) Publication of the grant of the patent:
**31.07.85 Bulletin 85/31**

(84) Designated Contracting States:
**CH DE FR GB LI SE**

(56) References cited:
**DE-A-2 807 411**
**DE-C- 363 532**
**FR-A- 627 699**
**FR-A-2 286 972**
**FR-A-2 315 632**
**GB-A- 134 992**
**US-A-2 650 864**
**US-A-2 779 641**
**US-A-4 089 570**
**US-A-4 252 386**

(73) Proprietor: **Litton Systems, Inc.**
**360 North Crescent Drive**
**Beverly Hills California 90210 (US)**

(72) Inventor: **THRASHER, Howard**
**5430 Crebs**
**Tarzana, CA 91356 (US)**

(74) Representative: **Cheyne, John Robert Alexander Mackenzie et al**
**HASELTINE LAKE & CO. 28 Southampton Buildings Chancery Lane London WC2A 1AT (GB)**

Courier Press, Leamington Spa, England.

## Description

This invention relates to anti-friction bearings having a plurality of rolling elements, such as balls, arranged between two races and normally used to support a rotatable shaft, secured to the inner race, by the housing, secured to its outer race.

Precision ball bearings of this type, when employed for example with the gimbals of stabilized platforms used in flight control and guidance systems, may be secured to the surrounding housing and to the shaft by means of adhesive substances. Unfortunately, fastening the bearing races with adhesive prevents the subsequent removal of the bearings.

Whenever the bearing races are made of a material which is different from the material of the housing and the shaft, the races have a coefficient of thermal expansion which is different from that of the housing and the shaft. For example, it may be desirable to fabricate the housing and the shaft of aluminium, but to fabricate the bearing races of steel. Aluminium has a higher thermal coefficient of expansion than steel. Consequently, when the temperature is decreased, the housing and the shaft pull away from the bearing races, while, when the temperature is increased, the housing and the shaft tighten onto the steel bearing races thus causing stresses in the aluminium housing and in the shaft.

To avoid problems of differential thermal expansion in ball bearings, as the most common form of anti-friction bearings, while still using steel races in conjunction with an aluminium housing and a shaft of aluminium, cuts in the form of slots have been made across the races by removing a small segment of each race thereby to form a gap. The bearing races are axially loaded, so that the steel races continually load the balls and are urged into contact with both the aluminium housing and the shaft. Differential thermal expansion between the parts made of aluminium and of steel merely causes changes in the width of the gap in the races and varies the load angle on the balls. Thus, the races are maintained at a tight fit with both the shaft and the housing. Because of the space left by the segment removal, the bearings can easily be inserted into and removed from the housing, and the shaft can easily be inserted into and removed from the inner race. However, unfortunately, when the balls cross the gap formed by the slot in the races, a short-duration torque pulse is observed between the races.

FR—A—2 286 972 discloses a bearing comprising rolling elements disposed between inner and outer races, at least one of the races being split to provide a gap which extends from the radially inner surface to the radially outer surface of the race and from one axial end to the other. An attempt to avoid the problem of torque pulses as the rolling elements cross the gap is made by forming the gap so that it extends obliquely of the axis of the bearing. Another attempt to solve the problem of torque pulses at gaps in bearing races is disclosed in GB—A—134992, in which the races are tapered adjacent the gap in order to reduce the radial loading on the balls as they cross the gap.

A similar proposal has been made in an unpublished development in which, to avoid the torque pulses between the races, ramps were machined into the ball tracks where the balls contact the gap. Such ramps remove the torque pulses, particularly when the gaps in both of the races are radially aligned, because of the large spacing between the races in the region of the gaps. However, the balls are unloaded, and, furthermore, such ramps are very difficult to machine.

According to the present invention, at least one of the race portions adjacent the gap is resilient in the radial direction and is unsupported on the side facing away from the path of the rolling elements.

The present invention is based upon the recognition that the torque pulses can be prevented by constructing the bearing races in such a manner that the two oppositely facing, i.e., oriented, ends of the bearing races which form the gap between themselves are resilient and unsupported, so that they can operate as springs. It was reasoned that by rendering these oppositely facing ends of the bearing races resilient, these portions would exhibit the needed compliance to permit the rolling elements of an anti-friction bearing, usually the balls of a ball bearing, to pass over the gaps without experiencing the undesirable torque pulses which sooner or later lead to destruction of the bearing. As will be seen from the following detailed description of an embodiment of the invention, the unsupported portions are suitably constructed as flat springs which can relatively simply be provided by reducing the thickness of the bearing race material in the area of the gaps.

In connection with this development of the inventive concept, it is of interest to note that the present invention is believed to teach away from the generally accepted, conventional rule requiring that bearing races must be rigid elements. In contrast, as explained above and described in more detail further below, the present invention, as is believed for the first time, teaches split bearing races which exhibit resilience in the area of the gap. This feature is believed to be charac-, teristic of the first practically useful development which avoids or at least substantially alleviates torque pulses.

In a practical embodiment of the invention, it is implemented by a ball bearing. i.e., the rolling elements are balls. Suitably, both end portions of at least one race, and preferably both end portions of both races, are resilient and unsupported.

It was found that in such practical embodiment the desired effect is suitably achieved when the end portions of a race are unsupported by virtue of their thickness being reduced in the region of the gap. Specifically, the thickness reduction of the inner race may be the result of an enlargement of the inner radius of the inner race, preferably resulting from the provision of a recess in the inner surface of the inner race in the region of the gap, forming a substantially circularly cylindrical surface whose diameter is less than the radius of the inner surface of the inner race. For best results, the recess may be symmetrically disposed with respect to the gap in the inner race.

In analogy with the thickness reduction of the inner race, the thickness reduction of the outer race may be the result of a reduction of the outer radius of the outer race, preferably resulting from the provision of a substantially flat surface portion in the region of the gap of the outer surface of the outer race, the flat surface portion extending along a chord of the outer diameter of the outer race. For best results, the flat surface portion may be symmetrically disposed with respect to the gap in the outer race.

It will thus be seen that a practical implementation of the fundamental concept of the present invention involves reducing the thickness of both races in their region adjacent the gap, i.e., where the slots have been or will be made. In the region of the gaps, the outer radius of the outer race is reduced, and the inner radius of the inner race is increased. The reducing of the outer radius of the outer race produces a space between the outer race and the housing in the region of the gap in the outer race, and both ends of the split outer race function as cantilevered springs. Similarly, the increase of the inner radius of the inner race produces a space between the inner race and the shaft in the region of the gap in the inner race, and both ends of the split inner race also function as cantilevered springs. In this embodiment the end portions of the races adjacent the gaps are flexed as the balls pass over the gaps, and no torque pulses are produced.

The invention will become better understood from the following detailed description of one embodiment thereof, when taken in conjunction with the drawings, wherein:

Figure 1 is a sectional view of a shaft mounted upon a pair of loaded ball bearings supported by a housing;

Figure 2 is a schematic plan view of a ball bearing assembly according to this invention;

Figure 3 is a view, partly in section, taken along line 3—3 of Figure 2; and

Figure 4 is an enlarged view of the top portion of Figure 2, illustrating the region around the gaps in the ball races.

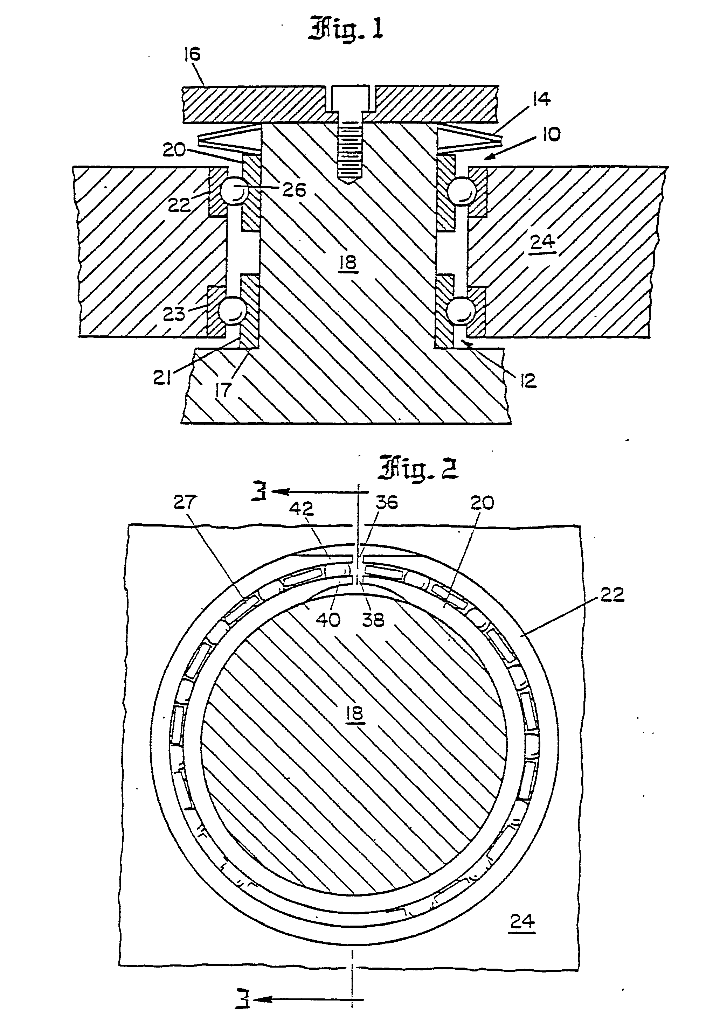

Anti-friction bearings, and especially ball bearings, of this invention are particularly useful in assemblies of the type shown in Figure 1, illustrating two loaded ball bearings 10 and 12, the ball bearings may be loaded by a Belleville spring 14 positioned between a flange 16 on the shaft 18 and the inner race 20 of the ball bearing 10. The inner race 21 of the ball bearing 12 engages a shoulder 17 of the shaft 18, so that the spring 14 loads both bearings 10 and 12. The outer races 22 and 23 of ball bearings 10 and 12 are pressed into contact with a housing 24. It will be realized that the housing 24 symbolizes any supporting structure which, at the same time, may assume the protective function of what may conveniently be called a housing.

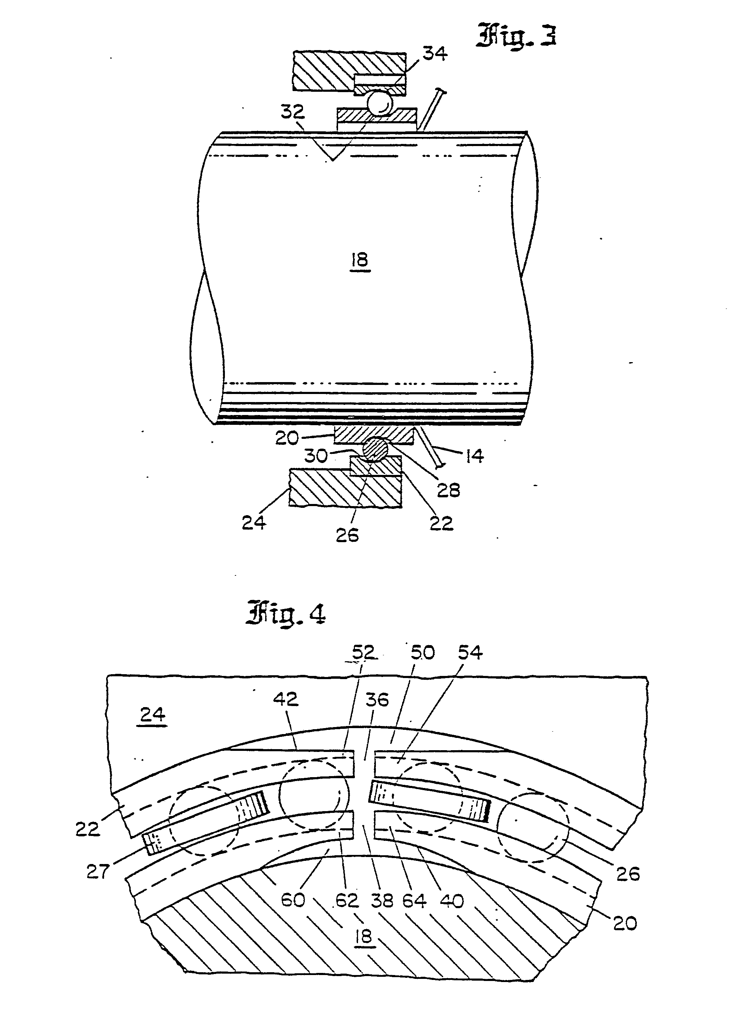

The illustrated embodiment of a ball bearing of this invention is better shown in Figures 2 and 3, together with enlarged portion of Figure 4. Only the ball bearing 10 is illustrated and described, because the bearing 12 is of identical construction.

The ball bearing 10 has a plurality of balls 26 between the outer race 22 and inner race 20. Alternative balls may support spacers 27 which may be made of the material known and available under the trademark TEFLON. The balls 26 are loaded, so that the points of contact between the balls 26 and the channels 28, 30 are staggered, as is conventional in the art and shown at 32, 34 in exaggerated view of Figure 3. Both the inner race 20 and the outer race 22 are split, i.e., each has a slot cut therethrough to form gaps 36, 38. For convenience, gaps 36, 38 are shown in an aligned configuration in Figures 2 and 4, but they will usually not be aligned.

To prevent the balls 26 from producing the undesirable torque pulses between the races 20 and 22 as they cross the gaps 36 and 38 and thus engage the edges of the gaps, it is contemplated by this invention to render the oppositely oriented ends of the races resilient which is accomplished in the illustrated embodiment by increasing the inner radius of the inner race 20 in the region of the gap 28, as shown at 40, and by reducing the outer radius of the outer race 22 in the region of the gap 36, as shown at 42, see Figure 4. The inner radius of the inner race 20 may be increased conveniently under use of a rotary machine tool which machines a recess 60 into the inner surface of the inner race, and the outer radius of the outer race 22 may be decreased conveniently by forming the substantially planar surface 42 substantially along a chord of the nonreduced outer diameter. This reduction of the outer radius of race 22 forms a space 50 between the race 22 and the housing 24, so that the oppositely oriented, i.e., facing ends 52 and 54 of the race 22 are unsupported and so function as cantilevered springs. The increase of the inner radius of the race 20 forms the recess 60 between the race 20 and the shaft 18 so that the oppositely oriented ends 62 and 64 of the race 20 are also unsupported and function as cantilevered springs. Note that the surface 42 is preferably substantially normal to gap 36, so that the ends 52 and 54 are of substantially identical shape. Note also that the substantially circularly cylindrical surface 40 of recess 60 has a diameter which is preferably less than the nonenlarged radius of the inner race 20. The axis of the cylindrical surface 40 is preferably substantially parallel to the axis of the inner race 20, and it is preferably symmetrical with respect to the gap 38 to cause the ends 62 and 64 to be of substantially identical shape. The alterations of the races 20, 22 may also be made by an electrical forming tool.

During operation, as the balls 26 cross over the gap 36, the ends 52 and 54 flex outwardly to avoid producing any substantial torque between the races 20 and 22. Similarly, as the balls 26 cross over the gap 38, the ends 62 and 64 flex inwardly, also to avoid producing any substantial torque between the races 20 and 22.

It is noted that in the vicinity of the gaps 36 and 38, i.e. in the region extending over the partial circumference of the spaces or recesses 50 and 60, the load-carrying capacity of the bearing is weakened. For that reason, it may be desirable that the length of these partial circumferences be minimized. These circumferences, however should be long enough to allow the ends 52, 54, 62 and 64 to flex sufficiently to avoid or at least alleviate producing torques between the races 20 and 22 whenever the balls 26 cross the gaps 36 and 38.

Typical dimensions of one embodiment of a ball bearing are:

Ball diameter: 0.32 cm nominal;

Nonreduced diameter of outer race 22: 5.08 cm;

Nonenlarged diameter of inner race 20: 3.90 cm;

Radius of Surface 49: 0.96 cm nominal;

Minimum thickness between the ball channel the outer diameter of race 22, and minimum thickness between the ball channel and the inner diameter of race 20: 0.025 cm;

Nominal nonreduced thickness of races 20 and 22: 0.2 cm;

Circumferential width of gaps 36 and 38: 0.013 cm.

The above dimensions are given by way of example only.

It will thus become apparent that the invention provides anti-friction bearings, such as ball bearings, wherein the undesirable phenomenon of torque pulses between the bearing races, created by the rolling elements, such as the balls when crossing the gaps, is prevented by allowing the ends of the races adjacent the gaps to flex as the rolling elements, or balls, cross the gaps.

Although one embodiment of the invention is described in detail above, it is not intended that the invention be limited by that description of the embodiment.

## Claims

1. A bearing comprising rolling elements (26) disposed between inner and outer races (20, 22), at least one of the races (20, 22) being split to provide a gap (36, 38) which extends from the radially inner surface to the radially outer surface of the race and from one axial end to the other, characterized in that at least one of the race portions (52, 54; 62, 64) adjacent the gap (36, 38) is resilient in a radial direction and is unsupported on the side facing away from the path of the rolling elements (26).

2. A bearing as claimed in claim 1, characterized in that the rolling elements (26) are balls.

3. A bearing as claimed in claim 1 or 2, characterized in that the race portions (52, 54; 62, 64) on each side of the gap (36, 38) of the split race (20, 22) are resilient.

4. A bearing as claimed in claim 3, characterized in that both of the races (20, 22) are split and in that the race portions (52, 54; 62, 64) on each side of each gap (36, 38) are resilient.

5. A bearing as claimed in any one of the preceding claims, characterized in that each resilient race portion (52, 54; 62, 64) is resilient by virtue of having a reduced thickness.

6. A bearing as claimed in claim 5, characterized in that the reduced thickness of the inner race (20) is the result of a local enlargement of the inner radius of the inner race (20) in the region of the gap (38).

7. A bearing as claimed in claim 6, characterized in that a recess (60) is provided in the inner surface of the inner race (20) in the region of the gap (38), the recess (60) having a substantially circular cylindrical surface (40) whose diameter is smaller than the radius of the inner surface of the inner race (20).

8. A bearing as claimed in claim 7, characterized in that the recess (60) is symmetrically disposed with respect to the gap (38) in the inner race (20).

9. A bearing as claimed in any one of claims 5 to 8, characterized in that the reduced thickness of the outer race (22) is the result of a local reduction of the outer radius of the outer race (22), in the region of the gap (36).

10. A bearing as claimed in claim 9, characterized in that a substantially flat surface portion (42) is provided on the outer surface of the outer race (22) in the region of the gap (36), the flat surface portion (42) extending along a chord of the outer diameter of the outer race (22).

11. A bearing as claimed in claim 10, characterized in that the flat surface portion (42) is symmetrically disposed with respect to the gap (36) in the outer race.

## Patentansprüche

1. Lager mit Wälzkörpen (26), welche zwischen inneren und äußeren Ringen (20, 22) angeordnet sind, von denen wenigstens ein Ring (20, 22) zur Bildung einer sich von der radial inneren Fläche zur radial äußeren Fläche des Rings und von einem axialen Ende zum anderen erstreckenden Lücke (36, 38) geschlitzt ist, dadurch gekennzeichnet, daß wenigstens einer der Ringabschnitte (52, 54; 62, 64) zunächst der Lücke (36, 38) in Radialrichtung federelastisch und an der der Laufbahn der Wälzkörper (26) abgewandten Seite nicht abgestützt ist.

2. Lager nach Anspruch 1, dadurch gekennzeichnet, daß die Wälzkörper Kugeln (26) sind.

3. Lager nach Anspruch 1 oder 2, dadurch gekennzeichnet, daß die Ringabschnitte (52, 54; 62, 64) zu beilden Seiten der Lücke (36, 38) des geschlitzten Rings (20, 22) federelastisch sind.

4. Lager nach Anspruch 3, dadurch gekennzeichnet, daß beide Ringe (20, 22) geschlitzt sind und daß die Ringabschnitte (52, 54; 62, 64) an jeder Seite jeder Lücke (36, 38) federelastisch sind.

5. Lager nach einem der vorstehenden Ansprüche, dadurch gekennzeichnet, daß jeder federelastische Ringabschnitt (52, 54; 62, 64) aufgrund einer verringerten Dicke federelastisch ist.

6. Lager nach Anspruch 5, dadurch gekennzeichnet, daß die verringerte Dicke des inneren Rings (20) aus einer örtlichen Vergrößerung des inneren Radius des inneren Rings (20) im Bereich der Lücke (38) resultiert.

7. Lager nach Anspruch 6, dadurch gekennzeichnet, daß die Innenfläche des inneren Rings (20) im Bereich der Lücke (38) eine Vertiefung (60) aufweist, welche eine im wesentlichen kreiszylindrische Oberfläche (40) hat, deren Radius kleiner ist als de Radius der Innenfläche des inneren Rings (20).

8. Lager nach Anspruch 7, dadurch gekennzeichnet, daß die Vertiefung (60) in bezug auf die Lücke (38) im inneren Ring (20) symmetrisch angeordnet ist.

9. Lager nach einem der Ansprüche 5 bis 8, dadurch gekennzeichnet, daß die verringerte Dikke des äußeren Rings (22) aus einer örtlichen Verkleinerung des äußeren Radius des äußeren Rings (22) im Bereich der Lücke (36) resultiert.

10. Lager nach Anspruch 9, dadurch gekennzeichnet, daß an der Außenfläche des äußeren Rings (22) im Bereich der Lücke (36) eine im wesentlichen ebene Oberfläche (42) vorgesehen ist, welche sich entlang einer Sekante am äußeren Durchmesser des äußeren Rings (22) erstreckt.

11. Lager nach Anspruch 10, dadurch gekennzeichnet, daß die ebene Oberfläche (42) in bezug auf die Lücke (36) des äußeren Rings symmetrisch angeordnet ist.

**Revendications**

1. Palier comportant des éléments roulants (26) disposés entre des bagues de roulement intérieure et extérieure (20, 22), au moins l'une de ces bagues de roulement (20, 22) étant fendue pour présenter une lacune (36, 38) s'étendant de la surface radialement à l'intérieur à la surface radialement à l'extérieur de cette bague de roulement, et d'une extrémité axiale à l'autre, caractérisé en ce qu'au moins l'une des portions (52, 54; 62, 64) de bague de roulement adjacente à la lacune (36, 38) est élastique dans une direction radiale et n'est pas supportée du côté non tourné vers la piste des éléments roulants (26).

2. Palier selon la revendication 1, caractérisé en ce que les éléments roulants (26) sont des billes.

3. Palier selon la revendication 1 ou 2, caractérisé en ce que les portions (52, 54; 62, 64) de bague de roulement situées de chaque côté de la lacune (36, 38) de la bague de roulement fendue (20, 22) sont élastiques.

4. Palier selon la revendication 3, caractérisé en ce que les deux bagues de roulement (20, 22) sont fendues et en ce que les portions (52, 54; 62, 64) de bague de roulement situées de chaque côté de chaque lacune (36, 38) sont élastiques.

5. Palier selon l'une quelconque des revendications précédentes, caractérisé en ce que l'élasticité de chaque portion élastique (52, 54; 62, 64) de bague de roulement résulte d'une réduction d'épaisseur.

6. Palier selon la revendication 5, caractérisé en ce que la réduction d'épaisseur de la bague de roulement intérieure (20) est le résultat d'un agrandissement local du rayon intérieur de la bague de roulement intérieure (20), dans la région de la lacune (38).

7. Palier selon la revendication 6, caractérisé en ce qu'un évidement (60) prévu dans la surface intérieure de la bague de roulement intérieure (20), dans la region de la lacune (38), cet évidement (60) ayant une surface (40) qui est sensiblement cylindrique et circulaire, dont le diamètre est plus petit que le rayon de la surface intérieure de la bague de roulement intérieure (20).

8. Palier selon la revendication 7, caractérisé en ce que l'évidement (60) est disposé symétriquement par rapport à la lacune (38) dans la bague de roulement intérieure (20).

9. Palier selon l'une quelconque des revendications 5 à 8, caractérisé en ce que l'épaisseur réduite de la bague de roulement extérieure (22) résulte d'une réduction locale du rayon extérieur de la bague de roulement extérieure (22), dans la région de la lacune (36).

10. Palier selon la revendication 9, caractérisé en ce qu'une portion de surface relativement plate (42) est prévue sur la surface extérieure de la bague de roulement extérieure (22), dans la région de la lacune (36), cette portion de surface plate (42) s'étendant le long d'une corde du diamètre extérieur de la bague de roulement extérieure (22).

11. Palier selon la revendication 10, caractérisé en ce que la portion de surface plate (42) est disposée symétriquement par rapport à la lacune (36) dans la bague de roulement extérieure.

**Fig. 1**

**Fig. 2**

**Fig. 3**

**Fig. 4**